# EUROPÄISCHE PATENTSCHRIFT

(11) **EP 3 015 697 B1**
(45) Veröffentlichungstag und Bekanntmachung des Hinweises auf die Patenterteilung: **15.08.2018**
(21) Anmeldenummer: 15190053.7
(22) Anmeldetag: 15.10.2015
(51) Int. Cl.: F02K 9/74, F02K 9/34, F42B 15/10, F02K 9/95

(54) **INTEGRIERTES FLUGKÖRPERANTRIEBSSYSTEM**
INTEGRATED MISSILE PROPULSION SYSTEM
SYSTEME D'ENTRAINEMENT DE MISSILE INTEGRE

(30) Priorität: 29.10.2014 DE 102014115722
(43) Veröffentlichungstag der Anmeldung: 04.05.2016
(73) Patentinhaber: Bayern-Chemie Gesellschaft für flugchemische Antriebe mbH, 84544 Aschau am Inn (DE)
(72) Erfinder: Hacker, Andreas, 83536 Gars (DE); Bartinger, Franz, 84494 Neumarkt-St. Veit (DE); Niedermaier, Helmut, 84524 Neuötting (DE); Stadler, Ludwig, 84453 Mühldorf (DE)
(74) Vertreter: LS-MP von Puttkamer Berngruber Loth Spuhler

(56) Entgegenhaltungen:
- WO-A1-02/36955
- DE-A1- 3 407 901
- DE-B3- 4 032 982
- FR-A- 1 351 422
- FR-A1- 2 448 636
- US-A- 3 879 942

## Beschreibung

Die Erfindung betrifft ein Flugtriebwerk mit wenigstens einem Ausstosstriebwerk zur Erzeugung eines Startschubs zum Antrieb eines Flugkörpers in der Startphase. Sie bezieht sich nicht zuletzt auf eine derartige Vorrichtung für schultergestützte Waffen.

Ein Flugtriebwerk und ein Ausstosstriebwerk sind Teil eines Flugkörpers. Ein Flugköper, wie er der vorliegenden Erfindung zu Grunde liegt, umfasst im Wesentlichen einen Seeker, d.h. eine optische Sucheinheit, einen Warhead, d.h. einen sogenannten Gefechtskopf, sowie ein Flugtriebwerk und ein Ausstosstriebwerk. Der Flugkörper wird in einer Ausstossvorrichtung beschleunigt. Ausstossvorrichtungen, nachfolgend auch Startvorrichtungen genannt, für Triebwerke gleich welcher Art, insbesondere in der Ausgestaltung von Abschussvorrichtungen für raketenartige Flugkörper, nehmen häufig ein Ausstosstriebwerk, auch Starttriebwerk genannt, und ein sogenanntes Haupttriebwerk, auch Marschtriebwerk oder - nachfolgend bevorzugt - Flugtriebwerk genannt, als Teil des Flugkörpers auf.

Das Haupttriebwerk wird von einem Ausstosstriebwerk beschleunigt und mittels einer Vorrichtung, z.B. eines Verzögerungszünders, erst dann gezündet, wenn es sich mit dem Gefechtskopf nach dem Ausstossen einer für den Schützen ungefährlichen Entfernung ausserhalb der Ausstossvorrichtung befindet. Das Haupttriebwerk wird dabei je nach Flugkörper gemäß dem Stand der Technik a von dem Ausstosstriebwerk getrennt.

Aus der DD 301 649 A7 ist eine Panzerabwehrrakete zur Bekämpfung von gepanzerten Fahrzeugen bekannt.

Die Panzerabwehrrakete umfasst je ein Ausstosstriebwerk und ein Marschtriebwerk auf. Zwischen beiden Triebwerken ist eine Trennwand angeordnet.

Die Trennwand weist mehrere Schubdüsen auf, die gleichzeitig Verzögerungssätze für die Treibladung des Marschtriebwerks aufnehmen.

Aus der französischen Druckschrift FR 2 448 636 ist eine Raketenanordnung bekannt, die zwei hintereinander angeordnete Brennkammern und eine Aussenumhüllung aufweist. Die in beiden Brennkammern angeordneten Treibstoffe werden simultan gezündet.

Aus der deutschen Patentschrift DE 40 32 982 B3 ist ein Lenksystem für mit einem fotoempfindlichen Detektor versehene Flugkörper zur Lenkung desselben gegen ein Ziel bekannt, wobei der fotoempfindliche Detektor von dem Flugkörper mitgeführt wird und eine Optik zugeordnet ist, die den Raum vor dem Flugkörper beobachtet. Das Lenksystem weist Beschleunigungssätze auf, die dem Flugkörper eine Anfangsgeschwindigkeit beim Start verleihen sowie einen Haupt-Schubantrieb, durch den der Schub während des Fluges gewährleistet wird.

Aus der deutschen Offenlegungsschrift DE 34 07 901 A1 ist eine kombinierte Schubdüse für Rückstosstriebwerke bekannt, die eine für den Startbetrieb und den Marschbetrieb gemeinsame Brennkammer aufweisen. Eine kombinierte Schubdüse für den Startbetrieb wird am Ende des Startbetriebes ausgestossen.

Die französische Patentschrift FR 1 351 422 zeigt ein Geschoss mit Hohlladung, bei der eine Brennkammer mit einem schnell brennenden Treibstoff vorgesehen ist und eine einzige Zündung stattfindet.

Bekannte Ausstosstriebwerke erweisen sich als nachteilig, da sie nach erfolgter Zündung und nach erfolgtem Start des Flugtriebwerks aus der Startvorrichtung ausgestoßen werden und im Umfeld vor der Startvorrichtung auf den Boden fallen. Dies hat zur Folge, dass die Startvorrichtung über das ausgestoßene Ausstosstriebwerk z.B. durch Lichtsensoren oder Wärmesensoren geortet werden kann.

Ein weiterer Nachteil liegt darin, dass der aus der Startvorrichtung herausgestoßene Treibsatz im großen Umfang Wärmeenergie ausstrahlt, die zu Verletzungen bei umstehenden Personen sowie beim Bediener selbst führen kann. Bewuchsmaterial auf dem Boden kann sich entzünden und zu einem Flächenbrand ausweiten, was ebenfalls zur Entdeckung der Startvorrichtung führen kann.

Des Weiteren kann ein Ausstoss und Aufschlagen des Treibsatzes im Bereich vor dem Bediener zur Freisetzung von Schadstoffen führen, die den Bediener der Startvorrichtung verletzen oder anderweitig beeinträchtigen können.

Die bisherigen Triebwerkskonstruktionen sind überdies sehr aufwändig in der Konstruktion und umfassen sehr viele Bauteile, was sehr nachteilig ist.

So werden bei den konventionellen Triebwerkskonstruktionen die jeweils verwendeten Brennkammern in ein nicht druckbelastetes Rohr eingeschoben. Dabei wird regelmäßig ein Abstand zwischen der Ummantelung der Brennkammer und dem nicht druckbelasteten Außenrohr des Flugtriebwerks vorgesehen. Dies bedeutet nicht nur eine damit einher gehende Erhöhung des Gesamtgewichts einer derartigen Triebwerkkonstruktion sondern auch eine Reduzierung des Volumens des jeweiligen in der Brennkammer zur Verfügung stehenden Treibstoffes. Diese Reduzierung des Treibstoffvolumens hat eine Reichweitenverkürzung zur Folge. Darüber hinaus ist dieses Design kostenträchtig.

Die Erfindung stellt sich daher die Aufgabe, eine Startvorrichtung bereitzustellen, die die genannten Nachteile eines vor dem Bedieners auf dem Boden aufschlagenden Triebwerkes vermeidet und somit eine Detektierbarkeit der Startvorrichtung oder eine Verletzung oder Beeinträchtigung des Bedieners oder anderer Personen in seinem Umfeld umgeht.

Des Weiteren soll die Masse der beschleunigten Teile reduziert werden.

Gleichzeitig soll die Teileanzahl reduziert werden.

Die Aufgabe wird gelöst durch einen Flugkörper nach Anspruch 1. Eine vorteilhafte Ausgestaltung findet sich in Unteranspruch 2.

Das Ausstosstriebwerk zur Erzeugung des Startschubs ist auch während des Flugs des Flugtriebwerks, auch Flugkörper genannt, mit diesem verbunden.

Die Flugkörperstruktur stellt zugleich die druckbeaufschlagte Brennkammer dar.

Die Erfindung versteht unter dem Begriff Flugtriebwerk ein technisches Gerät, das geeignet ist, in einem Luftraum zu fliegen.

Erfindungsgemäß bewirkt das wenigstens eine Flugtriebwerk den Schub für den Flug des Geräts. Das Flugtriebwerk führt hierzu in an sich herkömmlicher Weise den Schub der Düse zu. Flugtriebwerke können z.B. Raketen, Drohnen oder ähnliche unbemannte Geräte sein, gleichgültig ob beispielsweise feststoffangetrieben, flüssig- oder gelstoff- oder gasangetrieben.

Flugtriebwerke werden sowohl für zivile als auch für militärische Zwecke eingesetzt. Die zivile Nutzung ist vorzugsweise kommerzieller Natur und dient z.B. der Telekommunikation oder wissenschaftlichen Aufgaben.

Andererseits werden Flugtriebwerke besonders bevorzugt für militärische Zwecke eingesetzt. Hierbei eignen sich insbesondere Raketen z.B. als taktische oder als strategische Waffen.

Der Flugtriebwerk kann z.B. ein Lenkflugtriebwerk sein und als Waffensystem ausgebildet sein. Der Flugtriebwerk kann in gleicher Weise Kommunikations- und/oder Aufklärungszwecken dienen.

Der Flugtriebwerk erfüllt alternativ auch andere Aufgaben. Dabei ist es ist als Marschflugtriebwerk ausgebildet, das über eine eigene Steuerungseinheit verfügt. Mit Hilfe der Steuerungseinheit ist das Marschflugtriebwerk während des gesamten Fluges kontrollierbar und lenkbar.

In einer anderen Ausführungsform ist das Flugtriebwerk ein ballistisches Flugtriebwerk, das nach dem Start nicht mehr beeinflussbar ist.

Nach einer kurzen Beschleunigung in der Startphase erreicht das ballistische Flugtriebwerk sein Ziel ohne weiteren Antrieb auf einer elliptischen Flugbahn, die den Regeln der Ballistik folgt.

Die Startphase bezeichnet die Phase, in der das Flugtriebwerk aus dem Stand beschleunigt und sich vorzugsweise von einer Führungseinrichtung löst.

Bei der Führungseinrichtung kann es sich um eine Ausstossvorrichtung, insbesondere um eine Abschussvorrichtung handeln.

In und/oder während der Startphase des Flugtriebwerks ist der Flugtriebwerk vorzugsweise in einer Führungseinrichtung führbar.

Die Führungseinrichtung kann ein rohrförmiger Profilkörper sein.

Das Rohrprofil weist eine umlaufende, geschlossene Seitenwand auf.

Alternativ ist es auch denkbar, dass die Führungseinrichtung ein an seiner Seitenwand offenes Rohrprofil ist.

Zur Führung des Flugtriebwerks in der Startphase ist das Flugtriebwerk in die Führungseinrichtung einführbar.

Darüber hinaus ist es ebenfalls vorstellbar, dass die Führungseinrichtung eine Nut umfasst, in die der Flugtriebwerk mit einer Einrichtung zur Aufnahme des Startschubs eingreift.

Mit dem Abheben beginnt das Flugtriebwerk je nach Bau- oder Nutzungsart zu fliegen oder zu schweben.

Beim Abheben vorzugsweise aus einer Führungseinrichtung überwindet das Flugtriebwerk die Gewichtskraft. In der Startphase muss die Auftriebskraft stärker sein als die Gewichtskraft des Flugtriebwerks. Aus diesem Grund ist die Startart des Flugtriebwerks bauartbedingt und nutzlastbedingt unterschiedlich.

Der Flugtriebwerk entzündet vorzugsweise flüssige oder feste Brennstoffe, die im Flugtriebwerk angeordnet sind um die erforderliche Rückstoßkraft hervorzubringen, mit der sich der Flugtriebwerk fortbewegt.

Zur Gewinnung der Rückstoßkraft verfügt der Flugtriebwerk vorzugsweise über ein Ausstosstriebwerk, das wenigstens einen Treibsatz umfasst.

Zum Start des Flugtriebwerks kann eine Startvorrichtung, z.B. eine Abschussvorrichtung, vorgesehen sein.

Die Startvorrichtung kann schultergestützt auf einem Schützen oder auf einem Fahrzeug, Schiff, Flugzeugen oder sonstigen bewegbaren Vorrichtungen oder stationär angeordnet sein.

Die Startvorrichtung ist eine transportable oder fest installierte Vorrichtung, die das Flugtriebwerk bis kurz vor seinem Start aufnimmt.

Die Startvorrichtung umfasst vorzugsweise Versorgungsleitungen und Messkabel, mit denen der Flugtriebwerk verbindbar ist, und die vor dem Start abtrennbar sind.

Die Startvorrichtung dient der möglichst schnellen Beschleunigung des Flugtriebwerks.

Die Startvorrichtung kann eine zylindrische oder rohrförmige oder eine andere geometrische Form aufweisende Führungseinrichtung aufweisen.

Die Führungseinrichtung weist vorzugsweise eine umlaufende Seitenwand auf.

Aus einer Hauptdüse des Flugtriebwerks tritt das Schubgas aus.

Die Führungseinrichtung der Startvorrichtung ist an ihren beiden Stirnseiten offen, so dass das aus der Hauptdüse des Flugtriebwerks austretende Schubgas beim Start des Flugtriebwerks an der rückwärtigen Stirnseite der Startvorrichtung aus dieser entweichen kann.

Das Flugtriebwerk weist neben dem für den eigentlichen Flug erforderlichen Triebwerk ein Ausstosstriebwerk, auch Starttriebwerk genannt, zum Start sowie zur Beschleunigung eines Flugkörpers auf.

Erfindungsgemäß wird im Ausstosstriebwerk des Flugtriebwerks zur Einleitung der Startphase des Flugtriebwerks der Treibsatz gezündet.

Das Ausstosstriebwerk ist im Inneren des Flugkörpers angeordnet und erzeugt während der Startphase des Flugkörpers das Antriebsgas, das zur Bereitstellung der erforderlichen Rückstoßkraft aufgebracht werden muss.

Nach Beendigung der Startphase ist das Ausstosstriebwerk abschaltbar oder seine Funktion endet z.B. aufgrund des Aufbrauchens des Treibstoffes, automatisch.

Die Erzeugung des für den Flug des Flugkörpers erforderlichen Antriebsgases erfolgt vorzugsweise im Flugtriebwerk selbst.

Ein Treibsatz ist eine Treibladung, die insbesondere einen Satz von chemischen Substanzen in fester, flüssiger, viskoser oder gasförmiger Form umfasst.

Der Treibsatz ist ein Energieträger, der bei der Aktivierung der chemischen Substanzen ein großes Volumen anstrebt, und auf diese Weise in der Lage ist, ein Objekt, insbesondere einen Flugtriebwerk zu bewegen. Der Treibsatz ist der Treibstoff für das Ausstosstriebwerk.

Der Treibsatz hat die Aufgabe, einen lenkbaren oder nicht lenkbaren Flugkörper durch die Erzeugung von Schubgas mittels des Ausstosstriebwerks zu beschleunigen und aus der Startvorrichtung heraus anzutreiben.

Nach der Zündung brennt der Treibsatz ab und erzeugt das Schubgas in Form der entstandenen Verbrennungsgase. Zur Erhöhung des Drucks kann das Schubgas zusätzlich komprimiert werden.

Treibsätze können insbesondere nitrocellulose Pulver oder Schwarzpulver umfassen. Es versteht sich von selbst, dass der erfindungsgemäße Treibsatz darüber hinaus andere, den Startschub bewirkende feste, flüssige, viskose oder gasförmige Stoffe umfasst.

Die Düse bezeichnet eine vorzugsweise röhrenförmige technische Einrichtung. Der Flächeninhalt der technischen Einrichtung ist auf seiner gesamten Länge gleich, oder erweitert oder verjüngt. Darüber hinaus kann er jede denkbare komplexe Form aufweisen.

Die Düse bewirkt eine Umlenkung eines Schubgas- oder Flüssigkeitsstroms. Sie wandelt Druck in Bewegungsenergie um oder verteilt flüssige oder gasförmige Substanzen gleichmäßig im Inneren der Düse.

Im Inneren der Düse kann je nach Bedarf eine Strömung mit Unterschallgeschwindigkeit oder mit Überschallgeschwindigkeit fließen.

Der Flugkörper umfasst wenigstens ein Ausstosstriebwerk zur Gewinnung der Rückstoßkraft des Flugkörpers vorzugsweise in der Startphase des Fluges.

Das Ausstosstriebwerk und das Flugtriebwerk können in Bezug auf das Flugtriebwerk axial oder radial zueinander angeordnet sein.

Das Ausstosstriebwerk wirkt auf wenigstens eine Düse ein, die auf den Flugkörper wirkt und diesen beschleunigt und antreibt.

Erfindungsgemäß erfasst das wenigstens eine Ausstosstriebwerk wenigstens eine Brennkammer, in der ein Treibsatz mit seinem Treibstoff angeordnet ist.

Mit Zündung des Treibsatzes des Starttriebwerks entsteht in der Brennkammer ein Verbrennungsgas, das durch eine mit der Brennkammer verbundene Düse entweicht und auf diese Weise den Flugkörper beschleunigt.

Dem wenigstens einen Ausstosstriebwerk und dem wenigstens einen Flugtriebwerk ist wenigstens eine separate Düse zum Austrieb des Antriebsgases zugeordnet.

Erfindungsgemäß umfasst das Ausstosstriebwerk wenigstens eine Brennkammer, in der Treibsatz mit seinem Treibstoff angeordnet ist.

Mit Zündung des Treibsatzes entsteht in der Brennkammer ein Verbrennungsgas, das durch die mit der der Brennkammer verbundene Düse insbesondere einer Hauptdüse entweicht und auf diese Weise den Flugkörper antreibt.

Des Weiteren kann bei der erfindungsgemäßen Ausgestaltung der Flugkörperstruktur auf ein Einschieben einer Brennkammer, häufig in Form eines Brennkammerrohres, in das Innere der Flugkörperstruktur, wie dies beim Stand der Technik gehandhabt wird, verzichtet werden. Nach der Erfindung erfolgt mithin kein Einschub einer Brennkammer mehr in ein nicht druckbelastetes Rohr, insbesondere das Außenrohr des Flugtriebwerks. Die Aussenwandung der Flugköperstruktur wird so ausgestaltet, dass sie zugleich die druckbeaufschlagte Brennkammer darstellt. Dabei versteht sich von selbst, dass dies vorzugsweise nur in dem Bereich der Flugkörperstruktur erfolgt, in dem sich der Treibstoff für die Brennkammer befindet.

Vorzugsweise wird die Flugkörperstruktur in diesem Bereich materialmäßig so stabil ausgeführt, dass man zumindest diesen Bereich der Flugkörperstruktur mit Treibstoff befüllen kann.

Es bedarf aus diesem Grunde nur der Anordnung einer oder zweier Trennwände an geeigneter Stelle innerhalb der Flugkörperstruktur, um das Volumen des Treibstoffs auf das gewünschte Maß zu reduzieren.

Die Brennkammer des Flugtriebwerks und/oder des Ausstosstriebwerks umfasst in Längsrichtung des Flugkörpers auf beiden Seiten eine Trennwand, vorzugsweise einen Brennkammerboden und einen Heckboden mit Gasleitrohr, um die Brennkammer gegenüber dem Innenraum des Flugtriebwerks abzugrenzen.

Je nach Umfang und Größe des in der Brennkammer angeordneten Flugtreibsatzes kann der Brennkammerboden und/oder der Heckboden in und/oder entgegen der Flugrichtung des Flugtriebwerks verschoben werden.

Vorzugsweise sind der Brennkammerboden und/oder der Heckboden gegenüber der Innenwand der Flugtriebwerkhülle druckdicht eingepresst oder mit der Hülle des Flugtriebwerks verschweißt.

Die Seitenwand der Brennkammer, die den Brennkammerboden mit dem Heckboden verbindet, ist die Innenwand der Flugtriebwerkhülle.

Es ist denkbar, dass der in der Brennkammer angeordnete Treibsatz durch eine Isolierung gegenüber der Flugtriebwerkhülle abgegrenzt ist.

Die Isolierung legt sich auf der Innenseite des Flugtriebwerks dichtend an die Wandung der Hülle des Flugtriebwerks an.

Vorzugsweise ist zumindest der die Brennkammer umfassende Bereich der Flugkörperstruktur aus einem Stahlwerkstoff, dessen Zusammensetzung nach den gewünschten Einsatzbedingungen des Flugtriebwerks ausgewählt werden kann. Selbstverständlich sind auch andere geeignete Materialien verwendbar.

Die äußere Ummantelung des Flugkörpers um die Brennkammer ist deshalb im Bereich der Brennkammer vorzugsweise materialeinheitlich ausgestaltet.

Es ist aber auch möglich, die Außenummantelung der Hülle des Flugkörpers und die Innenummantelung der Hülle des Flugköpers, die gleichzeitig die Brennkammer begrenzt, sandwichartig, insbesondere unter Einsatz unterschiedlicher Materialien auszugestalten.

Durch diese kombinatorische Ausgestaltung des Flugkörpers werden die genannten Ziele effektiv erreicht. Durch das Mitführen des Ausstosstriebwerkes auch während des Fluges des Flugtriebwerkes wird insbesondere die thermale Detektierbarkeit insbesondere der Ausstossvorrichtung reduziert. Der damit an sich einhergehende prinzipielle Nachteil, dass die Flugkörperstruktur auch im Fluge die Masse des eigentlichen Flugtriebwerks und die Masse des Ausstosstriebwerks aufnehmen muss, wird mehr als überkompensiert dadurch, dass die Flugkörperstruktur zumindest partiell zugleich die druckbeaufschlagte Brennkammer darstellt.

Hierbei zeigt:

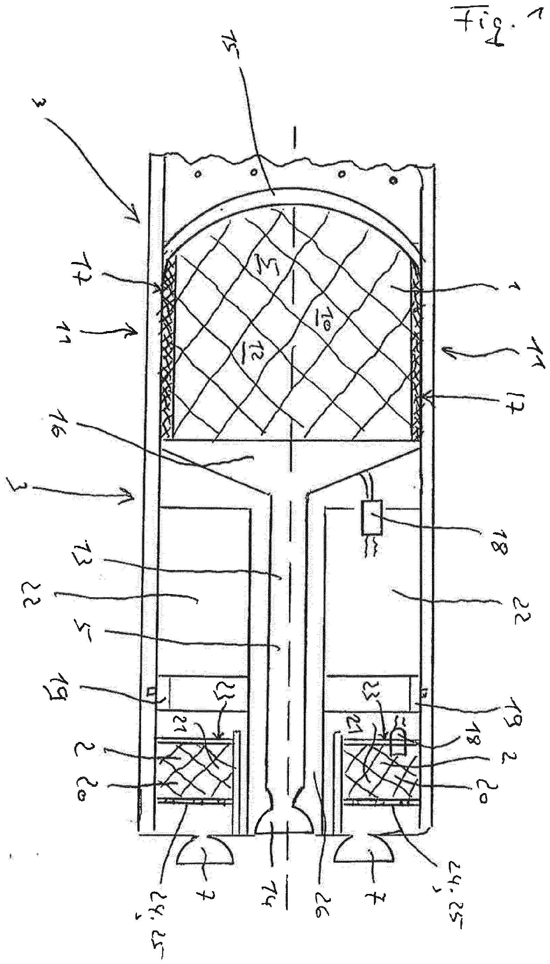

Fig. 1 den Ausschnitt eines Flugtriebwerks mit Start-Ausstosstriebwerk und zugehörigen Antriebsdüsen.

Fig. 1 zeigt ein Flugtriebwerk 3 mit einer Hülle 11 und stirnseitig angeordneten Düsen 7.

Die Hülle 11 stellt dabei in ihrer Längsausrichtung zumindest teilweise die druckbeaufschlagte Brennkammer 1 dar.

An der von den Düsen 7 abgewandten Stirnseite des Ausschnitts des Flugtriebwerks 3 ist eine Brennkammer 1 dargestellt, in der Treibsatz 10 angeordnet ist. Der Treibsatz 10 enthält einen Brennstoff 12, der nach der Zündung zu einem Antriebsgas 5 verbrennt.

Das Antriebsgas 5 wird einer Hauptleitung 13 zugeführt, die ein Antriebsgas 5 einer Hauptdüse 14 zuführt.

Die Brennkammer 1 weist an ihrer von der Düse 14 abgewandten Stirnseite einen Brennkammerboden 15 auf.

An der Stirnseite der Brennkammer 1, die der Düse 14 zugeordnet ist, ist ein Heckboden 16 angeordnet, der trichterförmig in die Hauptleitung 13 übergeht, die als Gasleitrohr ausgebildet ist. Vorzugsweise bildet der Heckboden 16 einen Abschnitt der Hauptleitung 13 aus.

Gegenüber der Hülse 11 des Flugtriebwerks 3 ist der Treibsatz 10 in der Brennkammer 1 durch eine Isolierung 17 von der Hülle 11 des Flugtriebwerks 3 abgegrenzt.

In Fig. 1 ist ein Anzünder 18 im Heckboden 16 vorgesehen, über den der Treibsatz 10 in der Brennkammer 1 gezündet wird.

Zwischen dem Heckboden 16 und der Hauptdüse 14 ist ein Verbindungsring 19 angeordnet.

Dem Verbindungsring 19kommt die Funktion eines Ruder-Stell-Systems zu.

Er ist dessen Träger.

Zwischen dem Verbindungsring 19 und der Hauptdüse 14 ist im Inneren des Flugtriebwerks 3 ein Starttriebwerk 20 in Form eines Ausstosstriebwerkes 2 dargestellt.

Das Starttriebwerk 20 umfasst einen Start-Treibsatz 21, der den für die Startphase des Flugtriebwerks 3 erforderlichen Startschub erzeugt.

Brennkammerseitig ist der Start-/Treibsatz 21 gegenüber dem Innenraum 22 des Flugtriebwerks 3 durch einen Verschluss 23 abgegrenzt. Der Innenraum 22 bietet dem Ruder-Stell-System Platz.

Im Verschluss 23 ist der Anzünder 18 zur Zündung des Start-Treibsatzes 21 vorgesehen.

An der von der Brennkammer 1 abgewandten Stirnseite 24 des Start-Treibsatzes 21 ist in Fig. 1 eine Filterscheibe 25 vorgesehen.

Die Filterscheibe 25 filtert insbesondere Partikel und Schadstoffe aus dem Verbrennungsgas des Start-Treibsatzes 21 heraus und führt das Antriebsgas 4 für das Ausstosstriebwerk aus dem Start-Treibsatz 21, Start-Düsen 7 zu.

In der Darstellung Fig. 1 erstrecken sich die Hauptdüse 14 und die Startdüsen 7 innerhalb des Flugtriebwerks 3 achsparallel zueinander.

Der Start-Treibsatz 21 steht mit der Düse 7 in Verbindung.

### Bezugsziffern

- 1.: Brennkammer
- 2.: Ausstosstriebwerk
- 3.: Flugtriebwerk
- 4.: Antriebsgas für Ausstosstriebwerk
- 5.: Antriebsgas für Flugtriebwerk
- 6.: freibleibend
- 7.: Düse
- 8.: Führungseinrichtung
- 9.: Rohrprofil
- 10.: Treibsatz
- 11.: Hülle
- 12.: Brennstoff
- 13.: Hauptleitung
- 14.: Hauptdüse
- 15.: Brennkammerboden
- 16.: Heckboden
- 17.: Isolierung
- 18.: Anzünder
- 19.: Verbindungsring
- 20.: Starttriebwerk
- 21.: Starttreibsatz
- 22.: Innenraum
- 23.: Verschluss
- 24.: Stirnseite
- 25.: Filterscheibe

## Patentansprüche

1. Flugkörper umfassend ein Flugtriebwerk (3), das ausgestaltet ist, den Schub für den Flug des Flugkörpers zu bewirken, mit wenigstens einer Brennkammer (1), und umfassend wenigstens ein Ausstosstriebwerk (2) mit einer Brennkammer zur Erzeugung eines Startschubs des Flugkörpers in einer Startphase, wobei die Brennkammer (1) des Flugtriebwerks (3) und die Brennkammer des Ausstosstriebwerks (2) zur Aufnahme eines Treibsatzes ausgestaltet sind, wobei das Ausstosstriebwerk so ausgestaltet ist, dass in ihm der Treibsatz zur Einleitung der Startphase des Flugkörpers gezündet werden kann und wobei das Flugtriebwerk (3) so ausgestaltet ist, dass in ihm der Treibsatz zur Erzeugung der erforderlichen Rückstoßkraft gezündet werden kann, mit der sich der Flugkörper fortbewegt, wobei die Brennkammer (1) des Flugtriebwerks (3) und die Brennkammer des Ausstosstriebwerks (2) in Längsrichtung des Flugkörpers auf beiden Seiten eine Trennwand umfassen, um die Brennkammern gegenüber dem Innenraum des Flugkörpers abzugrenzen, wobei dem wenigstens einen Flugtriebwerk (3) und dem wenigstens einen Ausstosstriebwerk (2) jeweils wenigstens eine separate Düse (7, 14) zum Austrieb des Antriebsgases zugeordnet ist, und wobei das Ausstosstriebwerk (2) während des Fluges mit dem Flugtriebwerk (3) verbunden ist, **dadurch gekennzeichnet, dass** der Flugkörper eine Flugkörperstruktur aufweist, die zugleich eine druckbeaufschlagte Brennkammer darstellt dergestalt, dass die Umhüllung (11) des Flugtriebwerks (3) Teil der druckbeaufschlagten Brennkammer (1) ist.

2. Flugkörper nach Anspruch 1, **dadurch gekennzeichnet, dass** das im Ausstosstriebwerk (2) erzeugte Antriebsgas (4) über eine Hauptleitung wenigstens einer Düse (7) zuführbar ist.

## Claims

1. Missile comprising an aircraft engine (3) configured to effect the thrust for the flight of the missile, having at least one combustion chamber (1), and comprising at least one ejection engine (2) with a combustion chamber for generating a take-off thrust of the missile in a launch phase, wherein the combustion chamber (1) of the aircraft engine (3) and the combustion chamber of the ejection engine (2) are configured to receive a propellant charge, wherein the ejection engine is configured in such a way that the propellant charge for initiating the launch phase of the missile can be ignited therein, and wherein the aircraft engine (3) is configured in such a way that the propellant charge for generating the necessary recoil force can be ignited therein, with which the missile moves, wherein the combustion chamber (1) of the aircraft engine (3) and the combustion chamber of the ejection engine (2) comprise a partition wall on both sides in the longitudinal direction of the missile in order to separate the combustion chambers from the interior of the missile, wherein the at least one aircraft engine (3) and the at least one ejection engine (2) are each associated with at least one separate nozzle (7, 14) for the expulsion of the propulsion gas, and wherein the ejection engine (2) is connected to the aircraft engine (3) during flight, **characterized in that** the missile has a missile structure which, at the same time, represents a pressurized combustion chamber in such a way that the casing (11) of the aircraft engine (3) is part of the pressurized combustion chamber (1).

2. Missile according to claim 1, **characterized in that** the propulsion gas (4) generated in the ejection engine (2) can be supplied via a main line to at least one nozzle (7).

## Revendications

1. Missile comprenant un réacteur (3) qui est réalisé pour provoquer la poussée pour le vol du missile, comportant au moins une chambre de combustion (1) et comprenant au moins un réacteur d'éjection (2) avec une chambre de combustion pour engendrer une poussée de départ du missile dans une phase de départ, la chambre de combustion (1) du réacteur (3) et la chambre de combustion du réacteur d'éjection (2) étant réalisées pour recevoir un charge propulsive, le réacteur d'éjection étant réalisé de telle sorte que dans lui-même la charge propulsive peut être allumée pour introduire la phase de départ du missile, et le réacteur (3) étant réalisé de telle sorte que dans lui-même, la charge propulsive peut être allumée pour engendrer la force de répulsion nécessaire avec laquelle le missile se déplace, la chambre de combustion (1) du réacteur (3) et la chambre de combustion du réacteur d'éjection (2) comprenant sur les deux côtés en direction longitudinale du missile une paroi de séparation pour délimiter les chambres de combustion par rapport à l'intérieur du missile, audit au moins un réacteur (3) et audit au moins un réacteur d'éjection (2) étant associée au moins une tuyère (7, 14) séparée respective pour l'expulsion du gaz d'entraînement, et le réacteur d'éjection (2) étant relié au réacteur (3) pendant le vol, **caractérisé en ce que** le missile présente une structure de missile qui constitue en même temps une chambre de combustion sous pression, de telle sorte que l'enveloppe (11) du réacteur (3) fait partie de la chambre de combustion (1) sous pression.

2. Missile selon la revendication 1, **caractérisé en ce que** le gaz d'entraînement (4) engendré dans le réacteur d'éjection (2) peut être amené à au moins une tuyère (7) via une conduite principale.
